# EUROPÄISCHE PATENTANMELDUNG

(11) **EP 0 578 273 A2**
(43) Veröffentlichungstag der Anmeldung: **12.01.1994**
(21) Anmeldenummer: 93112794.8
(22) Anmeldetag: 23.10.1990
(51) Int. Cl.: A47J 31/02, B65D 81/00

(54) **Kaffeeaufbrühfilter zur Herstellung einer Tassenportion Filterkaffee**

(30) Priorität: 23.10.1989 DE 8912543 U
(62) Teilanmeldung aus: 90915438.7
(71) Anmelder: FÜCHTEY, Roland, D-45147 Essen (DE); KNIPP, Michael, D-45239 Essen (DE); BRANDT, Werner, D-35102 Lohra (DE)
(72) Erfinder: Knipp, Dieter H., D-45147 Essen (DE)

(57) **Zusammenfassung**

Zur Herstellung einer Tassenportion Filterkaffee besteht der Kaffeeaufbrühfilter (200) aus einem beidseitig offenen, äußeren Faltkörper (201) aus feuchtigkeitsresistentem Material mit in Faltkörperlängsrichtung verlaufenden Faltlinien und aus einem im äußeren Faltkörper (201) angeordneten inneren, eine Portion Kaffeemehl aufnehmenden und bodenseitig verschlossenen Faltkörper aus Filterpapier mit einer oberen Wassereinführung und mit einer Längsfaltung, wobei die Faltlinien des äußeren und des inneren Faltkörpers bei einer wechselseitigen Faltung deckungsgleich sind, so daß durch Einziehen zweier sich gegenüberliegender Seitenwände der Kaffeeaufbrühfilter (200) zusammenlegbar ist. Der äußere Faltkörper (201) ist an seinem unteren Rand (201b) mit schlitzförmigen Durchbrechungen (215) versehen, um den Kaffeeaufbrühfilter paßgenau auf den umlaufenden Rand einer Kaffeetasse aufsetzen zu können.

## Beschreibung

Die Erfindung ist im Bereich der Zubereitung von Tassenportionen von Filterkaffee einsetzbar und betrifft einen Kaffeeaufbrühfilter zur Herstellung mindestens einer Tassenportion Filterkaffee.

Für das Zubereiten eines Kaffeegetränks aus gerösteten und gemahlenen Kaffeebohnen sind zahlreiche Verfahren bekannt. Neben der Abkochung, die der türkisch-arabischen Bereitungsweise zugrunde liegt, bei der staubfeines Kaffeemehl mit kaltem Wasser und Zucker zum Sieden erwärmt und dann der im Trübgetränk sich bildende Satz mit genossen wird, wird nach dem Aufgußverfahren Kaffeemehl mit kochend heißem Wasser zusammengebracht. Nach Ziehenlassen wird abgeseiht oder filtriert unter Verwendung von Papier-, Gewebs- oder Metallfilter. Beim Auslaugeverfahren wird ein kaffeemehlbeinhaltender Beutel aus durchlässigem Gewebe aus Natur- oder Kunstfaser oder aus gehärtetem Filterpapier in heißes Wasser gehängt. Darüber hinaus ist das Zubereiten von Kaffeegetränken mittels Kaffeeautomaten und Kaffeemaschinen bekannt.

Güte und Stärke eines Kaffeegetränkes hängen vornehmlich von Art und Menge des verwendeten Rohstoffes und von der Bereitungsweise, den verwendeten Gerätschaften und dem Wasser ab. Die Menge des je Tasse verwendeten Kaffeemehls wird sehr vom Geschmacksbedürfnis des einzelnen Menschen, dem Wohlstand der Verbraucher und auch gesundheitlichen Rücksichten bestimmt. Der Rauminhalt einer Kaffeetasse liegt üblicherweise zwischen 130 bis 165 ccm. Die Norm einer Tasse wird zu etwa 150 ccm angenommen. Für die Zubereitung des Kaffeegetränkes werden Konzentrationen von 1 g bis 30 g Kaffeemehl auf eine Tasse Wasser empfohlen. Die Begriffe des "schwachen" und "starken" Kaffees schwanken hinsichtlich ihrer Konzentrationen sehr. Als "mittelstarker Kaffee" ist ein Getränk anzusehen, das aus 6 bis 8 g Kaffeemehl je Tasse bereitet wird.

Da der Gehalt eines Aufgusses an allen Bestandteilen der gerösteten Bohne von der Zusammensetzung des jeweils verwendeten Kaffees und der Art der Zubereitung abhängt, werden solche Kaffeegetränke bevorzugt, die durch Aufguß von Kaffeemehl mit kochend heißem Wasser in einem Filter unter Verwendung eines Papierfilters zubereitet sind.

Beim Aufgußverfahren wird das Kaffeemehl mit dem kochend heißen Wasser außerhalb des den Filterkaffee aufnehmenden Behältnisses, wie Kaffeekanne od.dgl., zusammengebracht. Das Filtern des Kaffees erfolgt somit außerhalb des Behältnisses, was mühevoll und unwirtschaftlich ist, wenn beispielsweise nur eine Tasse Filterkaffee hergestellt wird. Hinzu kommt, daß keine vollständige Ausschöpfung des Kaffeearomas und u.a. auch der Kaffeebestandteile möglich ist.

Die FR-A-812 235 beschreibt einen Kaffeeaufbrühfilter, der aus einem etwa rohrförmigen Formkörper besteht und dessen Innenraum vermittels zweier waagerechter Trennwände aus Filterpapier in eine das Kaffeepulver aufnehmenden Kammer und in eine obere Kochendwasseraufnahmekammer unterteilt ist, wobei letztere Kammer in die obere Wassereinfüllöffnung mündet. Mittels einer scheibenförmigen Halterung, die an dem Außenumfang des Formkörpers befestigt ist, wird der Kaffeeaufbrühfilter auf den oberen umlaufenden Rand einer Tasse so aufgesetzt, daß der Formkörper mit seinem unteren Ende in den Innenraum der Tasse hineinreicht. Kochendes Wasser wird von oben dem Filter zugeführt und durchläuft die das Kaffeepulver aufnehmende Kammer, um am bodenseitigen Ende aus dem Filter herauszutreten. In der Tasse sammelt sich dann der Kaffee. Die obere Trennwand des Filterkörpers dient zur Verbindung des Austretens von Pulverkaffee, wenn der Filter bis zu seiner oberen Wassereinfüllöffnung mit kochendem Wasser angefüllt sein sollte. Dieser Kaffeeaufbrühfilter ist so ausgebildet, daß er während des Aufbrühvorganges nicht in den aufgebrühten Filterkaffee hineinreicht.

Einen auf die Einfüllöffnung einer Kaffeekanne aufsetzbaren Filter zum Aufbrühen von Kaffee beschreibt die FR-A-1 013 020, der aus einer mit einem Griff versehenen zylindrischen Halterung und dem eigentlichen in die Halterung einsetzbaren Filterkörper besteht, der ebenfalls zylindrisch ausgebildet und zwei waagerechte Trennwände aus einem Filtermaterial aufweist, wobei in der zwischen den beiden Trennwänden ausgebildeten Kammer gemahlener Kaffee angeordnet ist. Oberhalb der oberen Trennwand ist eine Kochendwasseraufnahmekammer ausgebildet, die zur Aufnahme des für das Aufbrühen des Kaffees erforderlichen heißen Wassers dient. Der zylindrische Filterkörper ist vermittels Abstandshalter in dem Innenraum der zylindrischen Halterung gehalten und weist in seiner unterhalb der unteren Trennwand ausgebildeten Bodenplatte einen Betätigungsknopf für das Öffnen und Verschließen von Auslauföffnungen des fertigen Kaffees, der der Kammer zugeführt wird. Auch dieser Kaffeeaufbrühfilter ist als Aufsetzfilter, hier auf eine Kaffeekanne, ausgebildet und reicht nicht in den Innenraum der Kanne hinein.

Aus der EP-A-287 910 geht ein Kaffeefilter mit einem auf den Rand einer Tasse aufseztbaren, aufrechte oder annähernd aufrechte Wandungen aufweisenden Halterahmen und einem innerhalb des Halterahmens befestigten Beutel aus Filtermaterial hervor, wobei der Halterahmen an der dem Filter zugewandten Seite hydrophob, d.h. wasserabweisend ,ausgebildet ist, während der Filterbeutel aus hydrophilem Filtermaterial besteht. Der Filterbeutel ragt während des Aufbrühvorganges nicht in die Tasse hinein und kommt auch nicht mit dem hergestellten Kaffee in Berührung. Der hier eingesetzte Halterahmen besteht aus hydrophobierter Pappe.

Es ist daher Aufgabe der Erfindung, eine Gerätschaft für das Herstellen eines Kaffeegetränkes nach dem Aufgußverfahren zu schaffen, mit der mühelos und wirtschaftlich eine Tasse Filterkaffee bei voller Ausnutzung des Kaffeearomas durch Verlagerung des Filter- und Aufbrühvorganges in den Innenraum der Tasse herstellbar ist.

Diese Aufgabe wird bei einem Kaffeeaufbrühfilter zur Herstellung von mindestens einer Tassenportion Filterkaffee, bestehend aus einem rohrförmigen Formkörper mit einer oberen Wassereinfüllöffnung und mit einer in seinem Innenraum angeordneten Portion Kaffeemehl, durch die im Patentanspruch 1 gekennzeichneten Merkmale gelöst.

Bei einem derartigen Kaffeeaufbrühfilter ist besonders vorteilhaft die Ausbildung des Kaffeeaufbrühfilters als Faltkörper mit Tassenrandeingriffschlitzen, die ein Aufsetzen des Kaffeeaufbrühfilters auf den Rand einer Kaffeetasse ermöglicht, wobei der das Kaffeemehl aufnehmende Innenkörper, der auch als Faltkörper ausgebildet ist, so ausgebildet sein kann, daß er oberhalb der Kaffeetassenöffnung zu liegen kommt oder mit einem Abschnitt bis in den Kaffeetasseninnenraum hineingeführt ist. Durch die Faltbarkeit ist der Kaffeeaufbrühfilter auf kleinsten Raum zusammenlegbar. Außerdem ermöglicht die Faltung ein Anpassen des Kaffeeaufbrühfilters an alle Größen der Kaffeetassenöffnung.

Vorteilhafte Ausgestaltungen der Erfindung sind in den Unteransprüchen gekennzeichnet.

Ausführungsbeispiele der Erfindung werden nachstehend anhand der Zeichnung näher erläutert. Es zeigen
Fig. 1 teils in Ansicht, teils in einem senkrechten Schnitt einen faltbaren Kaffeeaufbrühfilter in auf eine Kaffeetasse aufgesetztem Zustand,
Fig. 2 eine Ansicht von oben auf den Kaffeetassenaufbrühfilter,
Fig. 3 in einer schematischen Ansicht von oben auf den Kaffeeaufbrühfilter in zusammengefaltetem Zustand,
Fig. 4 in einer schematischen Ansicht von oben auf den Kaffeeaufbrühfilter in entfaltetem, d.h. aufgestelltem Zustand und
Fig. 5 in einer Seitenansicht das Filter des Kaffeeaufbrühfilters.

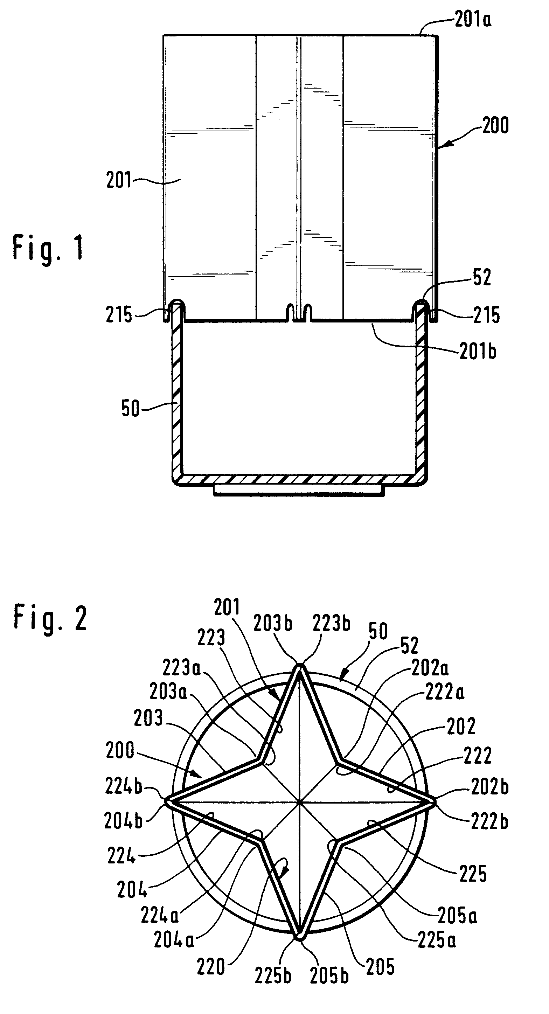

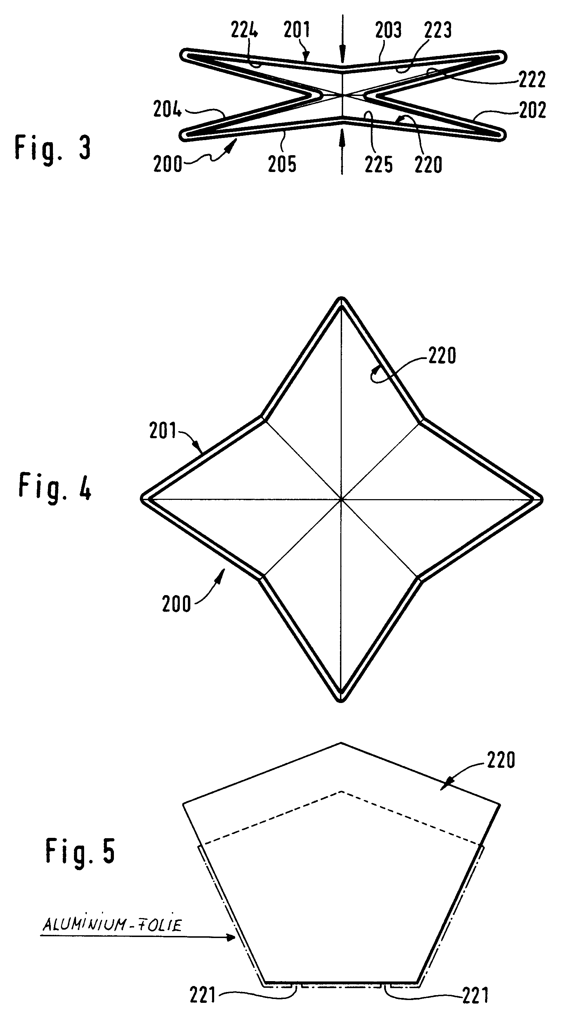

Nach der in Fig. 1 bis 5 dargestellten Ausführungsform besteht der mit 200 bezeichnete Kaffeeaufbrühfilter aus einem zylindrischen, äußeren Faltkörper 201 aus einem feuchtigkeitsresistenten Material, wie mit einer Kunststoffolie kaschierten oder mit einem Kunststoff beschichteten Pappe, Karton oder Papier, das eine ausreichende Eigensteifigkeit aufweist. In dem Innenraum dieses Faltkörpers 201 ist ein weiterer Faltkörper 220 angeordnet, der aus Filterpapier besteht und der die Menge an Kaffeepulver aufnimmt, die für die Herstellung einer Tassenportion Filterkaffee erforderlich ist (Fig.5).

Um im Nichtgebrauchszustand das Aroma des Kaffeemehls zu halten, ist das Filterpapier außenseitig mit einer Aluminiumfolie kaschiert; auch eine anderweitige Beschichtung zur Erzielung einer Wasserundurchlässigkeit ist möglich. Bodenseitig weist die Aluminiumfolie des inneren Faltkörpers 220 eine Anzahl von kleinen Durchbrechungen 221 auf. Dieser Faltkörper 220 kann mit dem äußeren Faltkörper 201, z.B. im oberen Randbereich, fest verbunden sein; auch eine aus dem Faltkörper 201 herausnehmbare Ausgestaltung ist möglich. Die obere Öffnung des Faltkörpers 220 ist vermittels einer abziehbaren Folie, z.B. aus Aluminium, verschlossen, um eine Aromahaltung des Kaffeemehls im Innenraum des Faltkörpers 220 über einen längeren Zeitraum zu gewährleisten. Für den Gebrauch und den Aufbrühprozeß wird diese Deckelfolie abgenommen, um die Einfüllöffnung für heißes Wasser freizulegen.

Der äußere Faltkörper 201 weist einen quadratischen oder rechteckförmigen Querschnitt auf, wobei jede der vier Seitenwände 202,203,204,205 mittig mit einer in Faltkörperlängsrichtung verlaufenden Faltlinie 202a bzw. 203a bzw. 204a bzw. 205a versehen ist, so daß aufgrund dieser Faltlinien der Faltkörper 201 auf kleinsten Raum zusammenfaltbar ist ( Fig.3). Im Gebrauchszustand, d.h. im entfalteten Zustand, ist dann der Faltkörper 201 sternförmig aufgefaltet (Fig.4). Der Faltkörper 201 ist oben- und bodenseitig offen ausgebildet. Der obere Rand ist mit 201a und der untere Rand mit 201b bezeichnet. Im Bereich des unteren Randes 201b und im Bereich der Eckfaltlinien 202b,203b,204b,205b sind schlitzförmige Ausnehmungen 205 vorgesehen , wobei die zu beiden Seiten einer Eckfaltlinie 202b,203b,204b,205b ausgebildeten, sich vom unteren Rand senkrecht nach oben erstreckenden Durchbrechungen 215 deckungsgleich miteinander sind. Vermittels dieser Durchbrechungen 205 ist der Kaffeeaufbrühfilter 200 auf den oberen umlaufenden Rand 52 einer Kaffeetasse 50 aufsetzbar, wobei der Kaffeetassenrand 52 in die Durchbrechungen 215 eingreift (Fig.8). Dadurch, daß der äußere Faltkörper 201 des Kaffeeaufbrühfilters 200 vermittels der Faltlinien in ihrer Fläche veränderbare Wandflächen aufweist, ist eine Anpassung des Kaffeeaufbrühfilters 200 an unterschiedliche Kaffeetassendurchmesser möglich.

Der innere Faltkörper 220 weist im entfalteten Zustand in etwa die Form einer Pyramide mit einer Grundfläche auf, die der Form des Querschnitts des zylindrischen Faltkörpers 201 im entfalteten Zustand entspricht. Auch der Faltkörper 220 weist in Faltkörperlängsrichtung verlaufende Faltlinien 222a,223a,224a,225a auf, die in den Faltkörperseitenwänden 222,223,224,225 ausgebildet sind und die sich bis in die Spitze des Faltkörpers 201 erstrecken (Fig.2). Das bodenseitige Ende des Faltkörpers 201 ist verschlossen. Die Eckfaltlinien sind mit 222b,223b,224b,225b bezeichnet. Dadurch, daß der innere Faltkörper 220 und der äußere Faltkörper 201 gleiche Faltungen aufweisen, sind beide Faltkörper in gleicher Weise zusammenfaltbar oder entfaltbar. Die Längenbemessung der beiden Faltkörper 201,220 zueinander kann derart sein, daß nach dem Aufsetzen des Kaffeeaufbrühfilters 200 auf den Tassenrand 52 der innere Faltkörper 220 oberhalb des Tasseninnenraumes mündet oder bis in den Tasseninnenraum hineinreicht.

Der Kaffeeaufbrühfilter 200 erbringt den Vorteil, daß er durch seine faltbare Geometrie platzsparend mit Kaffeemehl und z.B. in seinem unteren Bereich mit Milchpulver, Zucker u.dgl. zusammengepackt werden kann. Im aufgefalteten Zustand paßt der Kaffeeaufbrühfilter 200 sich jeder Tassenform an. Im Nichtgebrauchszustand ist die zusammengefaltete Verpackung allseitig verschlossen und nach dem Aufreißen des oberen Verschlusses wird durch Entfalten der Kaffeeaufbrühfilter erhalten und der Kaffeeaufbrühvorgang kann durch Zuführen von kochend heißem Wasser durchgeführt werden. Dadurch, daß der Kaffeeaufbrühfilter 200 auf den Kaffeetassenrand aufgesetzt wird, steht er nicht im Kaffeeaufguß. Das Aroma des Kaffees wird somit in keiner Weise beeinträchtigt. Der gesamte, den Kaffeeaufbrühfilter 200 bildende Formkörper ist als Faltpack herstellbar und weist durch seine Sternform eine hohe Stabilität auf. Beim Aufbrühvorgang durchläuft das kochend heiße Wasser den Kaffeeaufbrühfilter, so daß in der Tasse reiner aufgebrühter "Filterkaffee" aufgefangen wird.

Der Kaffeeaufbrühfilter 200 kann auch so bemessen sein, daß dieser nicht nur eine einzige Tassenportion an gemahlenem Kaffee aufnimmt. Die Menge an Kaffeemehl kann auch so bemessen sein, daß mehr als eine Tasse Kaffee erhalten wird, was insbesondere dann von Vorteil ist, wenn es sich um großvolumige Tassen oder andersartige Behältnisse handelt.

## Patentansprüche

1. Kaffeeaufbrühfilter zur Herstellung mindestens einer Tassenportion Filterkaffee, bestehend aus einem rohrförmigen Formkörper mit einer oberen Wassereinfüllung und mit einer in seinem Innenraum angeordneten Portion Kaffeemehl, dadurch gekennzeichnet, daß der Formkörper aus einem äußeren, beidseitig offenen Faltkörper (201) aus einem feuchtigkeitsresistenten Material mit in der Faltkörperseitenwand (202,203,204,205) ausgebildeten, in Faltkörperlängsrichtung verlaufenden Faltlinien (202a, 203a,204a,205a;202b,203b,204b,205b) und aus einem im Innenraum des äußeren Faltkörpers (201) angeordneten, inneren, mindestens eine Portion Kaffeemehl aufnehmenden Faltkörper (220) aus Filterpapier mit einer oberen Wassereinfüllöffnung besteht, wobei der innere Faltkörper (220) bodenseitig verschlossen ausgebildet ist und eine der Querschnittsform des äußeren Faltkörpers (201) entsprechende Formgebung und eine der Anzahl der Faltlinien (202a,203a,204a,205a;202b,203b,204b,205b) des äußeren Faltkörpers (201) entsprechende Anzahl von Faltlinien (222a,223a,224a,225a;222b,223b,224b,225b) aufweist, wobei die Faltlinien der beiden Faltkörper (201,220) deckungsgleich sich gegenüberliegend sind und wechselweise eine Faltung nach innen und nach außen derart ermöglichen, daß durch Einziehen zweier sich gegenüberliegender Seitenwände der Kaffeeaufbrühfilter (200) auf kleinsten Raum zusammenfaltbar und für den Gebrauchszustand entfaltbar ist, daß der äußere Faltkörper (201) an seinem unteren Rand (201b) mit einer Anzahl von in den Rand (201b) auslaufenden schlitzförmigen, in Faltkörperlängsrichtung verlaufenden Durchbrechungen (215) für den Eingriff des Tassenrandes bei auf den Tassenrand aufgesetztem Kaffeeaufbrühfilter (200) versehen ist, und daß der innere Faltkörper (220) eine Länge aufweist, die der Länge des äußeren Faltkörpers (201) entspricht oder die gegenüber der Länge des äußeren Faltkörpers (201) größer ist.

2. Kaffeeaufbrühfilter nach Anspruch 1, dadurch gekennzeichnet, daß der äußere Faltkörper (201) einen quadratischen oder rechteckförmigen Querschnitt aufweist, wobei jede der vier Faltkörperseitenwände (202,203,204, 205) mittig mit einer in Faltkörperlängsrichtung verlaufenden Faltlinie (202a;203a;204a;205a) und in den Faltkörpereckbereichen mit parallel zu diesen Faltlinien verlaufenden Faltlinien (202b;203b;204b;205b) versehen ist, daß die Faltlinien (202a bis 205a; 202b bis 205b) derart in den Faltkörperseitenwänden ausgebildet sind, daß die benachbart zu den Faltlinien (202a bis 205a) liegenden Wandabschnitte durch Eindrücken aufeinanderlegbar und in den Gebrauchszustand in Anpassung an jeden Tassenöffnungsdurchmesser entfaltbar sind, daß der innere Filterkörper (220) die Form einer Pyramide mit einer der Querschnittsform des äußeren Faltkörpers (201) entsprechenden, die Wassereinfüllöffnung bildenden Grundfläche und mit in den Seitenwänden (222, 223,224,225) und in den Eckbereichen ausgebildeten Faltlinien (222a,223a,224a,225a; 222b,223b,224b,225b) aufweist, wobei sich die Faltlinien vom oberen umlaufenden Öffnungsrand (201a) bis zur Endspitze erstrecken, und daß benachbart zum unteren Rand (201b) des äußeren Faltkörpers (201) in den zu beiden Seiten einer jeden Eckfaltlinie (202b bis 205b) liegenden Seitenwänden je eine schlitzförmige Durchbrechung bzw. Ausnehmung (215) ausgebildet ist, wobei die beiden Durchbrechungen (215) in den beiden Seitenwänden sich gegenüberliegend und im zusammengefalteten Zustand des Faltkörpers (201) deckungsgleich sind.

3. Kaffeeaufbrühfilter nach einem der Ansprüche 1 und 2, dadurch gekennzeichnet, daß der äußere (201) und der innere Faltkörper (220) gleiche Formen und Faltlinien aufweist.

4. Kaffeeaufbrühfilter nach einem der Ansprüche 1 bis 3, dadurch gekennzeichnet, daß der innere Faltkörper (220) mit dem Kaffeemehl in den Innenraum des äußeren Faltkörpers (201) eingesetzt und so bemessen ist, daß der innere Faltkörper (220) mit seinen Seitenwänden an den Innenwandflächen der Seitenwände des äußeren Formkörpers (201) anliegt.

5. Kaffeeaufbrühfilter nach einem der Ansprüche 1 bis 4, dadurch gekennzeichnet, daß der innere Faltkörper (220) mit dem Kaffeemehl mit dem äußeren Faltkörper (201) fest verbunden ist.

6. Kaffeeaufbrühfilter nach einem der Ansprüche 1 bis 5, dadurch gekennzeichnet, daß der innere Faltkörper (220) mit seinem oberen Rand an dem oberen Rand des äußeren Faltkörpers (201) verbunden ist.

7. Kaffeeaufbrühfilter nach einem der Ansprüche 1 bis 6, dadurch gekennzeichnet, daß der äußere Faltkörper (201) mit einer geschmacksneutralen Kunststoffolie oder mit einem Kunststoff beschichtet ist.

8. Kaffeeaufbrühfilter nach einem der Ansprüche 1 bis 6, dadurch gekennzeichnet, daß der innere Faltkörper (220) aus Filterpapier mit einer Außenwandbeschichtung aus einer Aluminiumfolie besteht und die Aluminiumfolie im bodenseitigen Bereich mit Durchbrechungen (221) zum Austritt des aufgebrühten Kaffees versehen ist.

9. Kaffeeaufbrühfilter nach einem der Ansprüche 1 bis 8, dadurch gekennzeichnet, daß die obere Öffnung des inneren Faltkörpers (220) mittels eines abziehbaren Deckelverschlusses aus Aluminiumfolie oder einer geschmacksneutralen Kunststoffolie verschlossen ist.
